# EUROPÄISCHE PATENTSCHRIFT

(11) **EP 3 718 154 B1**
(45) Veröffentlichungstag und Bekanntmachung des Hinweises auf die Patenterteilung: **09.03.2022**
(21) Anmeldenummer: 17807878.8
(22) Anmeldetag: 01.12.2017
(51) Int. Cl.: H01M 50/20, H01M 50/24

(54) **BATTERIEGEHÄUSE**
BATTERY HOUSING
BOÎTIER POUR UNE BATTERIE

(43) Veröffentlichungstag der Anmeldung: 07.10.2020
(73) Patentinhaber: HOPPECKE Batterien GmbH & Co. KG, 59929 Brilon (DE)
(72) Erfinder: KESPER, Heinrich, 34508 Willingen (DE)
(74) Vertreter: Brinkmann & Partner
(86) Internationale Anmeldenummer: PCT/EP2017/081177
(87) Internationale Veröffentlichungsnummer: WO 2019/105570

(56) Entgegenhaltungen:
- DE-A1-102013 021 246
- DE-U1-202012 104 578
- JP-A- 2005 243 580
- US-A1- 2012 003 508

## Beschreibung

Die Erfindung betrifft ein Gehäuse zur Aufnahme einer Lithium-Ionen-Akkumulatorzelle. Desweiteren betrifft die Erfindung eine Gehäuseanordnung, die über eine Mehrzahl von Gehäusen zur jeweiligen Aufnahme einer Lithium-Ionen-Akkumulatorzelle aufweist.

Es sind aus dem Stand der Technik stationäre Energiespeicher zur Zwischenspeicherung von Strom bekannt. Derartige Energiespeicher können beispielsweise Stromnetzbetreibern und/oder stromerzeugenden Unternehmen dazu dienen, außerhalb von Stromspitzenzeiten anfallenden, überschüssigen Strom zwischen zu speichern, der dann zu Stromspitzenzeiten ins Netz eingespeist werden kann. Unerwünschte Stromschwankungen im Netz können damit vermieden werden.

Stationäre Energiespeicher der eingangs genannten Art können durch sogenannte Großakkumulatoren gebildet sein, die jeweils über eine Mehrzahl von elektrisch miteinander verschalteten Akkumulatormodulen verfügen, wobei jedes Akkumulatormodul eine Mehrzahl von elektrisch miteinander verschalteten Akkumulatorzellen aufweist. Gemäß einer typischen Bauform kommen als Akkumulatorzellen Bleiakkumulatorenzellen zum Einsatz. Von Nachteil derartiger Bleiakkumulatorenzellen ist allerdings, dass sie zur Aufnahme oder Abgabe hoher Ströme innerhalb eines vergleichsweise kurzen Zeitraums weniger gut geeignet sind. Gerade aber die Eigenschaft, hohe Ströme innerhalb eines vergleichsweise kurzen Zeitraums aufnehmen oder abgeben zu können, ist eine bei stationären Energiespeichern der eingangs genannten Art erwünschte Eigenschaft.

Um diese Eigenschaftsanforderung gerecht zu werden, sind aus dem Stand der Technik auch Großakkumulatoren bekannt geworden, die nicht auf Basis von Bleiakkumulatorzellen, sondern auf Basis von Lithium-Ionen-Akkumulatorzellen aufgebaut sind. Denn der Vorteil solcher Lithium-Ionen-Akkumulatorzellen besteht darin, dass sie hohe Ströme in vergleichsweiser kurzer Zeit sowohl bereitstellen als auch aufnehmen können. Von Nachteil bei Lithium-Ionen-Akkumulatorzellen ist jedoch, dass eine Tiefenentladung vermieden werden muss, genauso wie eine Überladung. Insbesondere ein Überladen von Lithium-Ionen-Akkumulatorzellen ist insoweit gefährlich, als dass es zu einer Brandauslösung oder gar Explosion kommen kann. Derartige Brände lassen sich dem Grunde nach nicht löschen, weil beim Brand einer Lithium-Ionen-Akkumulatorzelle Sauerstoff entsteht, so dass es mit herkömmlichen Löschmitteln, die die Sauerstoffzufuhr unterbinden, nicht möglich ist, Lithium-Ionen-Akkumulatorzellen zu löschen.

Kommt es zu einem Brand einer Lithium-Ionen-Akkumulatorzelle besteht insbesondere bei einem Großakkumulator die Gefahr, dass der Brand auf benachbarte Lithium-Ionen-Akkumulatorzellen übergreift, so dass infolge der Überladung nur einer Lithium-Ionen-Akkumulatorzelle die Gefahr droht, dass der gesamte Großakkumulator abbrennt. Neben der Gefahr eines Brandübertrags auf dem Großakkumulator nebengeordneter Objekte und/oder Gebäudeteile ist der betriebswirtschaftliche Schaden zum Teil erheblich, denn Lithium-Ionen-Akkumulatoren sind in der Anschaffung sehr teuer.

Um den vorgenannten Nachteilen zu begegnen, ist es aus dem Stand der Technik bekannt, Lithium-Ionen-Akkumulatorzellen zu kapseln, das heißt in einem Gehäuse unterzubringen, das dafür Sorge tragen soll, dass im Brandfall benachbarte Lithium-Ionen-Akkumulatorzellen nicht in Mitleidenschaft gezogen werden. Die insoweit vorbekannten Gehäusekonstruktionen sind in ihrem Aufbau sehr kompliziert, was eine Montage beziehungsweise Demontage erschwert und zeitlich aufwendig macht. Darüber hinaus haben sich vorbekannte Gehäuse insofern als untauglich herausgestellt, als dass sie nicht miteinander zur Ausbildung beispielsweise eines Großakkumulators sinnvoll kombiniert werden können. Es kommen deshalb bei Großakkumulatoren Regalsysteme zur Aufnahme von mehreren zueinander benachbarten Lithium-Ionen-Akkumulatorzellen zum Einsatz, welchen Regalsystemen wiederum der Nachteil anhaftet, dass es im Brandfall zu einer Ansteckung benachbarter Zellen kommen kann.

Zur Behebung dieser widerstreitenden Eigenschaften ist es die **Aufgabe** der Erfindung, ein Gehäuse zur Aufnahme einer Lithium-Ionen-Akkumulatorzelle konstruktiv derart weiterzubilden, dass bei gleichzeitig effektivem Brandschutz für benachbarte Lithium-Ionen-Akkumulatorzellen ein einfacher Aufbau gegeben ist, der die Möglichkeit einer vereinfachten Montage beziehungsweise Demontage erbringt.

Zur **Lösung** dieser Aufgabe wird mit der Erfindung vorgeschlagen ein Gehäuse zur Aufnahme einer Lithium-Ionen-Akkumulatorzelle, mit einem einen Boden und zwei Seitenwände aufweisenden, U-förmig ausgebildeten Grundkörper, mit einer ersten und einer zweiten Frontabdeckung und einer ersten und einer zweiten rückwärtigen Abdeckung, wobei zwischen erster und zweiter Frontabdeckung und zwischen erster und zweiter rückwärtiger Abdeckung jeweils ein Feuerschutzmaterial angeordnet ist, und mit einem ersten und einem zweiten Deckelteil, die unter Ausbildung eines Spaltraums beabstandet zueinander angeordnet sind, und mit einer an dem zweiten Deckelteil, an dem Boden und an den Seitenwänden anliegenden Umhüllung aus einem Feuerschutzmaterial, sowie mit in Gehäusehöhenrichtung gehäuseunterseitig und/oder gehäuseoberseitig vorgesehenen Verbindungsmitteln und gehäuseunterseitig und/oder gehäuseoberseitig vorgesehenen Verbindungsmittelaufnahmen, wobei die Verbindungsmittel und die Verbindungsmittelaufnahmen korrespondierend zueinander angeordnet sind.

Das erfindungsgemäße Gehäuse verfügt als erste Baukomponente über einen Grundkörper. Dieser Grundkörper weist einen Boden und zwei Seitenwände auf. Dabei sind die Seitenwände einander gegenüberliegend am Boden angeordnet, so dass sich insgesamt eine U-förmige Ausgestaltung des Grundkörpers ergibt.

Der Grundkörper ist bevorzugterweise einstückig ausgebildet und besteht aus einem abgekanteten Blechteil. Alternativ hierzu können der Boden und die Seitenwände auch separat voneinander ausgebildet und miteinander beispielsweise durch Schweißen verbunden sein.

Der U-förmig ausgebildete Grundkörper ist frontseitig sowie rückseitig offen ausgebildet.

Zum Verschluss dieser offenen Seiten sind Frontabdeckungen einerseits sowie rückwärtige Abdeckungen andererseits vorgesehen, die im endmontierten Zustand des Gehäuses am Grundkörper angeordnet sind. Bevorzugterweise sind die Frontabdeckungen und die rückwärtigen Abdeckungen mit dem Grundkörper verschraubt.

Das Gehäuse verfügt über zwei Frontabdeckungen, nämlich eine erste Frontabdeckung und eine zweite Frontabdeckung. Im endmontierten Zustand ist zwischen der ersten Frontabdeckung einerseits und der zweiten Frontabdeckung andererseits ein Feuerschutzmaterial angeordnet. Bei diesem Feuerschutzmaterial handelt es sich um eine Matte aus einem feuerbeständigen Fasermaterial, welches erfindungsgemäß feuerdurchschlagsfest ist. Im endmontierten Zustand des Gehäuses ist dieses Feuerschutzmaterial zwischen erster und zweiter Frontabdeckung lagefixiert, womit eine feuerschutzgesicherte Gehäusefrontseite gegeben ist. Das Feuerschutzmaterial ist bevorzugterweise luftdurchlässig, nicht aber rauchdurchlässig ausgebildet. Die Luftdurchlässigkeit des Feuerschutzmaterials ist deshalb von Vorteil, als dass so die Möglichkeit gegeben ist, im bestimmungsgemäßen Betriebsfall Kühlluft in das Gehäuse einbringen zu können, wie dies im Weiteren noch näher erläutert werden wird.

Das Gehäuse verfügt desweiteren über zwei rückwärtige Abdeckungen, und zwar eine erste rückwärtige Abdeckung und eine zweite rückwärtige Abdeckung. Im endmontierten Zustand ist zwischen diesen beiden rückwärtigen Abdeckungen ein Feuerschutzmaterial angeordnet, bei dem es sich bevorzugterweise um dasselbe Feuerschutzmaterial handelt, wie es zwischen erster Frontabdeckung und zweiter Frontabdeckung angeordnet ist. Im endmontierten Zustand ist das Feuerschutzmaterial zwischen den beiden rückseitigen Abdeckungen lagesicher fixiert, so dass eine rückwärtige Feuerschutzsicherung des Gehäuses gegeben ist.

Das Gehäuse verfügt als weitere Baukomponente über ein erstes und ein zweites Deckelteil. Diese beiden Deckelteile sind im endmontierten Zustand unter Ausbildung eines Spaltraums beabstandet voneinander angeordnet. Dieser Spaltraum ist im endmontierten Zustand des Gehäuses luftgefüllt. Insoweit stellt der Spaltraum zwischen erstem Deckelteil und zweitem Deckelteil einen Luftraum bereit. Dieser Luftraum dient dazu, bei einem bestimmungsgemäßen Betrieb der vom Gehäuse aufgenommenen Lithium-Ionen-Akkumulatorzelle Kühlluft in das Gehäuse einbringen zu können. Diese Kühlluft dient einer Kühlung der Lithium-lonen-Akkumulatorzelle, was die Betriebssicherheit erhöht und insbesondere dafür Sorge trägt, dass ein unerwünscht weites Aufheizen der Lithium-Ionen-Akkumulatorzelle unterbleibt. Das Einbringen von als Kühlluft dienenden Luft in den Spaltraum zwischen erstem Deckelteil und zweitem Deckelteil erfolgt bevorzugterweise mittels einer dafür vorgesehenen Ventilatoreinheit, die beispielsweise rückseitig des Gehäuses aus der das Gehäuse umgebenden Atmosphäre Luft ansaugt und diese in den Spaltraum zwischen erstem Deckelteil und zweitem Deckelteil einbring. Auch eine frontseitige Zuführung von Kühlluft ist natürlich denkbar.

Im Brandfall erfüllt der zwischen den beiden Deckenteilen ausgebildete Spaltraum zwei Funktionen. Zum einen wird ein Luftpolster geschaffen, das thermisch isolierend wirkt. Im Brandfall entstehende Hitze wirkt mithin nicht direkt auf das zweite, äußere Deckelteil ein, sondern vielmehr nur indirekt unter Zwischenschaltung des ersten Deckelteils und des zwischen erstem Deckelteil und zweitem Deckelteil ausgebildeten Spaltraums. Damit ergibt sich im Brandfall ein deutlich reduzierter Hitzeintrag in das außen liegende, zweite Deckelteil.

Im Brandfall dient der Spaltraum desweiteren dazu, entstehenden Rauch aufnehmen zu können. Denn das im Gehäuse insgesamt verbaute Feuerschutzmaterial hält im Brandfall entstehenden Rauch zurück und sorgt in vorteilhafter Weise dafür, dass kein Rauch nach außen in die Atmosphäre austreten kann. Insofern dient der zwischen erstem Deckelteil und zweitem Deckelteil ausgebildete Spaltraum als Rauchausweichraum, in den der im Brandfall entstehende Rauch einströmen kann.

Als weitere Baukomponente verfügt das Gehäuse über eine Umhüllung aus einem Feuerschutzmaterial. Diese Umhüllung aus einem Feuerschutzmaterial liegt im endmontierten Zustand des Gehäuses am zweiten Deckelteil, an dem dem zweiten Deckelteil gegenüberliegenden Boden des Grundkörpers sowie an den Seitenwänden des Grundkörpers an. Bei dem Feuerschutzmaterial für die Umhüllung kann es sich im Vergleich zum Feuerschutzmaterial zwischen den Frontabdeckungen bzw. den rückwärtigen Abdeckungen um ein anderes Feuerschutzmaterial handeln. Denn das die Umhüllung bildende Feuerschutzmaterial ist im bestimmungsgemäßen Betriebsfall nicht von Kühlluft durchströmt und braucht deshalb auch nicht luftdurchlässig ausgebildet sein. Insoweit ist auch ein keramikgleiches Feuerschutzmaterial bevorzugt, welches das Gehäuse auch im Falle einer großen Hitzeentwicklung im Brandfall derart sicher umgibt, dass ein Feuer- und/oder Hitzedurchschlag auf benachbarte Gehäuse sicher vermieden ist.

Im Ergebnis dieser Ausgestaltung ist eine Vollkapselung mit Feuerschutzmaterial gegeben, wobei die Umhüllung das Gehäuse über den Boden, die beiden Seitenwände und das zweite Deckelteil umlaufend umgibt, und wobei ein frontseitiger Schutz beziehungsweise ein rückwärtiger Schutz durch das Feuerschutzmaterial gegeben ist, das zwischen den beiden Frontabdeckungen beziehungsweise zwischen den beiden rückwärtigen Abdeckungen angeordnet ist. Die Vollkapselung sorgt dafür, dass im Brandfall sichergestellt ist, dass es zu keinem Rauchaustritt kommen kann und dass kein Feuer auf benachbarte Lithium-Ionen-Akkumulatorzellen übergreifen kann, womit eine kaskadierende Ansteckung benachbarter Lithium-Ionen-Akkumulatorzellen sicher unterbunden ist.

Das Gehäuse verfügt desweiteren über Verbindungsmittel einerseits sowie über Verbindungsmittelaufnahmen andererseits. Dabei sind die Verbindungsmittel beziehungsweise die Verbindungsmittelaufnahmen in Gehäusehöhenrichtung gehäuseunterseitig und/oder gehäuseoberseitig ausgebildet. Demnach können entweder gehäuseoberseitig Verbindungsmittel und gehäuseunterseitig Verbindungsmittelaufnahmen vorgesehen sein. Eine umgekehrte Anordnung ist ebenfalls denkbar. Auch eine Mischausgestaltung, wonach gehäuseunterseitig und gehäuseoberseitig sowohl Verbindungsmittel als auch Verbindungsmittelaufnahmen vorgesehen sind, ist möglich und gemäß einer Ausführungsform der Erfindung auch bevorzugt.

Die Verbindungsmittel beziehungsweise die Verbindungsmittelaufnahmen dienen dazu, mehrere Gehäuse der vorbeschriebenen Art zu einem Gehäusestapel übereinander anzuordnen, und zwar lagesicher. Dabei greifen die Verbindungsmittel beziehungsweise Verbindungsmittelaufnahmen benachbarter Gehäuse bevorzugterweise derart ineinander, dass eine Lagefixierung der Gehäuse relativ zueinander sowohl in Höhenrichtung als auch quer hierzu gegeben ist.

Um die Kompatibilität der Verbindungsmittel zu den Verbindungsmittelaufnahmen zu gewährleisten, sind die Verbindungsmittel und die Verbindungsmittelaufnahmen korrespondierend zueinander ausgebildet, erlauben also im endmontierten Zustand mehrerer zu einem Gehäusestapel miteinander kombinierter Gehäuse ein bestimmungsgemäßes Eingreifen ineinander, so dass bevorzugterweise sowohl in vertikaler Richtung als auch in horizontaler Richtung ein lagesicheres Übereinanderstapeln einzelner Gehäuse ermöglicht ist.

Im Ergebnis der erfindungsgemäßen Konstruktion steht, dass das Gehäuse aus einzelnen Baukomponenten gebildet ist, die in denkbar einfacher Weise miteinander kombiniert und montiert werden können. Die Verbindung der einzelnen Gehäusekomponenten erfolgt beispielsweise durch Verschrauben. Dies erlaubt im Reparaturfall eine einfache Demontage. Es können aber auch andere Verbindungstechniken gewählt werden, beispielsweise wieder lösbare Rastverbindungen.

Zudem erlauben es die gehäuseseitig vorgesehenen Verbindungsmittel und Verbindungsmittelaufnahmen, dass mehrere Gehäuse miteinander zu einem Gehäusestapel kombiniert werden können, und dies bevorzugterweise werkzeugfrei. Dabei greifen die Verbindungsmittel und die Verbindungsmittelaufnahmen benachbarter Gehäuse formschlüssig derart ineinander, dass bevorzugterweise sowohl in horizontaler Richtung als auch in vertikaler Richtung eine Lagefixierung gegeben ist, womit es ergänzender Gehäusestapelsicherungen nicht bedarf.

Die im endmontierten Zustand vom Gehäuse aufgenommene Lithium-Ionen-Akkumulatorzelle ist erfindungsgemäße vollständig innerhalb eines Feuerschutzmaterials gekapselt angeordnet. Damit ist wirkungsvoll sichergestellt, dass es im Brandfall nicht zu einem Feuerübertrag auf benachbarte Gehäuse kommen kann.

Die erfindungsgemäße Gehäusekonstruktion erbringt aufgrund des zwischen dem ersten Deckelteil und dem zweiten Deckelteil ausgebildeten Spaltraums zudem den Vorteil, dass ein Hitzeeintrag im Brandfall in das zweite, äußere Deckelteil deutlich reduziert ist. Dieser Vorteil kommt insbesondere bei einer Übereinanderordnung mehrerer Gehäuse zum Tragen, weil sich dann mit Ausnahme für die im Gehäusestapel zu oberst und zu unterst angeordneten Lithium-Ionen-Akkumulatorzellen je Lithium-Ionen-Akkumulatorzelle zwei thermisch isolierend wirkende Luftpolster ergeben, die je Lithium-Ionen-Akkumulatorzelle in Höhenrichtung jeweils oberseitig und unterseitig der Lithium-Ionen-Akkumulatorzelle ausgebildet sind.

Die vorbeschriebenen Merkmale des erfindungsgemäßen Gehäuses wirken synergetisch zusammen und erbringen in ihrer Kombination die schon vorstehend erläuterten Vorteile. Damit eignet sich das erfindungsgemäße Gehäuse insbesondere dazu, Lithium-Ionen-Akkumulatorzellen zu einem Großakkumulator zur Ausbildung eines stationären Energiespeichers miteinander zu kombinieren.

Zur Ausbildung eines Großakkumulators ist es bevorzugt, eine Mehrzahl von Lithium-lonen-Akkumulatorzellen zu einem Akkumulatormodul miteinander zu kombinieren. So können beispielsweise 8 Lithium-Ionen-Akkumulatorzellen mit je 248,2 W/h miteinander zu einem Akkumulatormodul kombiniert sein, welches Modul dann ca. 1,98 kW/h bereitstellt.

Ein erfindungsgemäßes Gehäuse kann in seinen Größenabmessungen bevorzugterweise derart ausgebildet sein, dass es zwei solcher Akkmulatormodule aufnimmt, mithin insgesamt 16 Lithium-Ionen-Akkumulatorzellen.

Gemäß dieser vorgeschlagenen Ausführungsform ist im Brandfall der Schaden auf zwei Akkumulatormodule, mithin auf 16 Lithium-Ionen-Akkumulatorzellen beschränkt.

Die beiden von einem erfindungsgemäßen Gehäuse aufgenommenen Akkumulatormodule bilden zusammen eine Moduleinheit. Zur Ausbildung eines Großakkumulators können beispielsweise 16 solcher Moduleinheiten miteinander kombiniert werden, womit in Summe 256 Lithium-Ionen-Akkumulatorzellen vorliegen. Diese 16 Moduleinheiten bilden ein sogenanntes Powerrack. 10 solcher Powerracks können in einem herkömmlichen Transportcontainer (Überseecontainer) untergebracht sein, womit ein so ausgebildeter Großakkumulator im Bedarfsfall in einfacher Weise betrieben und auch transportiert werden kann.

Zur Ausbildung eines Powerracks können zwei Stapel von Moduleinheiten ausgebildet werden, wobei je Moduleinheitenstapel 8 Moduleinheiten vorgesehen sind. Dabei beherbergt jede Moduleinheit zwei in einem erfindungsgemäßen Gehäuse angeordnete Module, wobei die Moduleinheitenstapel in einfacher Weise dadurch ausgebildet werden, dass die erfindungsgemäßen Gehäuse in schon vorbeschriebener Weise übereinander angeordnet werden, wobei dann im Nachgang einer solchen Übereinanderstapelung je Gehäuse eine Bestückung mit zwei Modulen stattfinden kann. Die gehäuseseits jeweils vorgesehenen Verbindungsmittel beziehungsweise Verbindungsmittelaufnahmen sorgen für einen sicheren Halt der übereinander angeordneten Gehäuse, womit im endmontierten Zustand der Moduleinheitenstapel eine lagesichere und -fixierte Stapelanordnung gegeben ist.

Die einzelnen Gehäusekomponenten bestehen bevorzugterweise aus einem korrosionsfesten Metall, vorzugsweise in einer vergleichsweise dicken Blechstärke. Dies deshalb, damit im Brandfall ein nicht unerheblicher Teil der frei werdenden Hitze vom Gehäuse selbst aufgenommen und damit von benachbarten Gehäusen abgehalten werden kann. Die Wärmeschutzummantelung des Gehäuses durch das Feuerschutzmaterial sorgt indes dafür, dass ein Wärmeübertrag auf benachbarte Gehäuse sicher unterbunden ist.

Es ist gemäß einem weiteren Merkmal der Erfindung vorgesehen, dass das erste Deckenteil Ausnehmungen aufweist. Das erste Deckelteil ist in Höhenrichtung unterhalb des zweiten Deckelteils angeordnet, wobei zwischen erstem Deckelteil und zweitem Deckelteil ein luftgefüllter Spaltraum ausgebildet ist. Dieser Spaltraum dient im Brandfall der Aufnahme von Rauch, wobei zwecks Einleitung von Rausch in den zwischen erstem Deckelteil und zweitem Deckelteil vorgesehenen Spaltraum Ausnehmungen im ersten Deckelteil ausgebildet sind. Die im ersten Deckelteil erfindungsgemäß vorgesehenen Ausnehmungen ermöglichen mithin einen Rauchübertritt, aus dem vom Gehäuse bereitgestellten Volumenraum zur Aufnahme der Lithium-Ionen-Akkumulatorzellen in den zwischen den beiden Deckelteilen ausgebildeten Spaltraum.

Gemäß einem weiteren Merkmal der Erfindung ist vorgesehen, dass die erste Frontabdeckung eine Beschickungsöffnung bereitstellt. Diese Beschickungsöffnung dient im endmontierten Zustand des Gehäuses dazu, Lithium-Ionen-Akkumulatorzellen beziehungsweise aus Lithium-Ionen-Akkmulatorzellen gebildete Akkumulatormodule in das Gehäuse einbringen zu können. Die frontseitige Ausgestaltung einer Beschickungsöffnung gestattet es mithin, die diesbezügliche Frontabdeckung endfertig am Grundkörper des Gehäuses anzuordnen, bevor eine Beschickung des Gehäuses mit Lithium-Ionen-Akkumulatorzellen beziehungsweise Akkumulatormodulen erfolgt. Diese konstruktive Ausgestaltung ermöglicht mithin eine herstellerseitige Vormontage des Gehäuses, womit am Aufstellungsort nur noch eine Bestückung des Gehäuses mit anschließender Montage nur noch der zweiten Frontabdeckung erfolgen kann.

Gemäß einem weiteren Merkmal der Erfindung ist vorgesehen, dass die rückwärtige Abdeckung eine Durchlassöffnung bereitstellt. Diese Durchlassöffnung dient insbesondere im bestimmungsgemäßen Betriebsfall dazu, Kühlluft von außen in den Spaltraum zwischen erstem und zweitem Deckelteil einbringen zu können. Dabei ist die Durchlassöffnung bevorzugterweise mittels quer zueinander verlaufender Stege in Einzelöffnungen unterteilt. Diese quer zueinander verlaufenden Stege dienen insbesondere einer Abstützung des zwischen der ersten rückwärtigen Abdeckung und der zweiten rückwärtigen Abdeckung angeordneten Feuerschutzmaterials. Einerseits wird so die lagesichere Fixierung des Feuerschutzmaterials zwischen den beiden rückwärtigen Abdeckungen sichergestellt, sowie andererseits ein Einwandern des Feuerschutzmaterials in den vom Gehäuse bereitgestellten Volumenraum verhindert. Insgesamt ist so eine vollflächige Abdeckung der rückwärtigen Gehäuseseite durch das zwischen den rückwärtigen Abdeckungen angeordnete Feuerschutzmaterial sichergestellt.

Gemäß einem weiteren Merkmal der Erfindung ist die zweite rückwärtige Abdeckung ein Lochblech. Die zweite rückwärtige Abdeckung stellt mithin eine Vielzahl von Durchtrittsöffnungen zur Verfügung, durch die hindurch im bestimmungsgemäßen Betriebsfall von außen Kühlluft in das Gehäuseinnere strömen kann.

Gemäß einem weiteren Merkmal der Erfindung ist vorgesehen, dass die erste Frontabdeckung und die erste rückwärtige Abdeckung jeweils als Rahmenelement ausgebildet sind. Dies erbringt im endmontierten Zustand des Gehäuses eine Versteifung, so dass konstruktiv die für einen sicheren Betrieb der vom Gehäuse aufgenommenen Lithium-Ionen-Akkumulatorzellen erforderliche Tragfähigkeit des Gehäuses gegeben ist. Bevorzugterweise sind die Frontabdeckung und die rückwärtige Abdeckung mit dem Grundkörper verschraubt, was einerseits eine einfache Montage gestattet, andererseits aber auch eine Demontage ermöglicht.

Gemäß einem weiteren Merkmal der Erfindung ist vorgesehen, dass die erste Frontabdeckung und die erste rückwärtige Abdeckung den Grundkörper allseitig überragen. Sowohl die Frontabdeckung als auch die rückwärtige Abdeckung stehen mithin umfangsseitig über den Grundkörper hinaus vor. Es ist so eine Art Vorsprung zwischen Grundkörper und Frontabdeckung beziehungsweise rückwärtiger Abdeckung ausgebildet. Dieser Vorsprung dient der Aufnahme der am zweiten Deckelteil, den beiden Seitenwänden und dem Boden anliegenden Umhüllung aus einem Feuerschutzmaterial, so dass im endfertig montierten Zustand ein insgesamt bündiger Abschluss gegeben ist.

Gemäß einem weiteren Merkmal der Erfindung ist vorgesehen, dass das erste Deckelteil in Gehäusehöhenrichtung unterhalb der oberen Abschlusskante von der ersten Frontabdeckung und von der ersten rückwärtigen Abdeckung angeordnet ist. Durch diese in Höhenrichtung nach unten versetzte Anordnung des ersten Deckelteils ergibt sich der im endmontierten Zustand zwischen erstem Deckelteil und zweitem Deckelteil ausgebildete Spaltraum. Dieser Spaltraum erbringt die schon vorstehend erläuterten Vorteile, und zwar sowohl während eines bestimmungsgemäßen Betriebs als auch im Brandfall.

Gemäß einem weiteren Merkmal der Erfindung ist vorgesehen, dass die Verbindungsmittel Vorsprünge sind, beispielsweise Bolzen, Laschen, Absätze und/oder dergleichen. Diese lassen sich in einfacher Weise an einem der Gehäuseteile des Gehäuses anordnen beziehungsweise einstückig mit diesen ausbilden.

Die Verbindungsmittelaufnahmen sind gemäß einem weiteren Merkmal der Erfindung Ausnehmungen zur formschlüssigen Aufnahme von Verbindungsmitteln, wie zum Beispiel Bohrungen, Nuten, Schlitze und/oder dergleichen. In derartige Ausnehmungen greifen im endmontierten Zustand die korrespondierend hierzu ausgebildeten Verbindungsmittel. Dabei ist es bevorzugt, zur Lagesicherung in horizontaler Richtung und/oder vertikaler Richtung Verbindungsmittel mit Hinterschnitt auszubilden, so dass eine hintergreifende Anordnung in den zugehörigen Verbindungsmittelaufnahmen entsteht.

Gemäß einem weiteren Merkmal der Erfindung wird eine Gehäuseanordnung vorgeschlagen. Im einfachsten Ausführungsfall verfügt eine solche Gehäuseanordnung über ein Gehäuse der vorstehend beschriebenen Art, ein das Gehäuse aufnehmende Rahmenelement, wie dies im Weiteren noch erläutert werden wird, sowie eine gehäuseseitig ausgebildete Abschlussplatte. Bevorzugt ist indes aber eine Gehäuseanordnung mit einer Mehrzahl von in Höhenrichtung übereinander angeordneten Gehäusen gemäß der vorbeschriebenen Art, wobei die Verbindungsmittel eines Gehäuses in die Verbindungsmittelaufnahmen des in Höhenrichtung darüber und/oder darunter angeordneten Gehäuses eingreifen. Im übereinander geordneten Zustand der Gehäuse ergibt sich eine Art Regalausgestaltung. Dabei können je Gehäuse eine Mehrzahl von Lithium-Ionen-Akkumulatorzellen beziehungsweise eine Vielzahl von aus Lithium-Ionen-Akkumulatorzellen aufgebauten Akkumulatormodule aufgenommen werden. Je nach Anzahl der übereinander gestapelten Gehäuse kann eine entsprechende Anzahl von Lithium-Ionen-Akkumulatorzellen beziehungsweise Akkumulatormodule je Gehäusestapel aufgenommen werden. Dabei sorgen die gehäuseseits vorgesehenen Verbindungsmittel beziehungsweise Verbindungsmittelaufnahmen dafür, dass übereinander angeordnete Gehäuse lagesicher in ihrer relativen Ausrichtung zueinander positioniert sind. Die formschlüssig ineinandergreifenden Verbindungsmittel beziehungsweise Verbindungsmittelaufnahmen ermöglichen es, dass eine Gehäuseübereinanderstapelung werkzeugfrei erfolgen kann, was eine besonders einfache Montage beziehungsweise Demontage gestattet.

Die Gehäuseanordnung verfügt gemäß einem weiteren Merkmal der Erfindung über ein Rahmenelement, das unterhalb des in Höhenrichtung zu unterst angeordneten Gehäuses angeordnet ist. Ein solches Rahmenelement dient als Basis für eine Gehäuseübereinanderstapelung. Zu diesem Zweck ist das Rahmenelement aufstellbodenseitig plan ausgebildet, so dass ein kippfreier Stapelstand möglich ist. Oberseitig verfügt das Rahmenelement über entsprechende Verbindungsmittel und/oder Verbindungsmittelaufnahmen, in die die korrespondierend hierzu ausgebildete Verbindungsmittel beziehungsweise Verbindungsmittelaufnahmen des im Gehäusestapel zu unterst angeordneten Gehäuses eingreifen können. Es wird so eine lagesichere Anordnung des im Gehäusestabel zu unterst angeordneten Gehäuses relativ zum darunterliegenden Rahmenelement erreicht.

Gemäß einem weiteren Merkmal der Erfindung ist eine Gehäuseanordnung vorgesehen, die über eine Mehrzahl von nebeneinander angeordneten Gehäusestapeln verfügt, die jeweils eine Mehrzahl von in Höhenrichtung übereinander angeordneten Gehäuse der vorbeschriebenen Art aufweist. Dabei sind benachbarte Gehäusestapel miteinander verbunden, insbesondere miteinander verschraubt. Eine solche Verschraubung ist aufgrund der lagesicheren Anordnung der einzelnen Gehäuse dem Grunde nach nicht erforderlich, erhöht aber gleichwohl die Standsicherheit der einzelnen Gehäusestapel. Diese zusätzliche Standsicherheit ist insbesondere dann von Vorteil, wenn die zur Ausbildung eines Großakkumulators miteinander zu kombinierenden Gehäusestapel innerhalb eines Containers angeordnet sind, der im Bedarfsfall einen einfachen Transport ermöglicht.

Weitere Merkmale und Vorteile der Erfindung ergeben sich aus der nachfolgenden Beschreibung anhand der Figuren. Dabei zeigen:
- Fig. 1: in schematischer Explosionsdarstellung ein erfindungsgemäßes Gehäuse;
- Fig. 2 bis 12: in jeweils schematisch perspektivischer Ansicht das Gehäuse nach der Erfindung in unterschiedlichen Montagezuständen;
- Fig. 13: in schematisch perspektivischer Ansicht ein Rahmenelement einer erfindungsgemäßen Gehäuseanordnung;
- Fig. 14 bis 16: in jeweils perspektivischer Ansicht eine erfindungsgemäße Gehäuseanordnung aus unterschiedlichen Blickrichtungen.

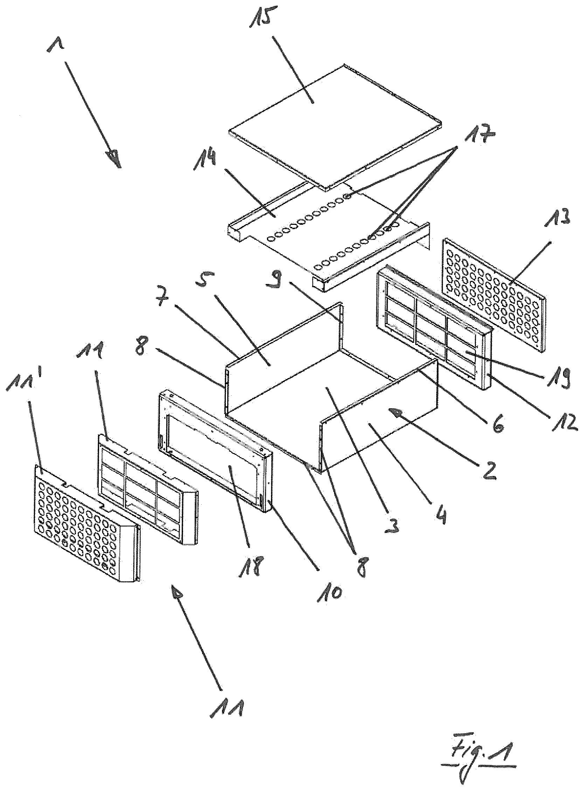

Figur 1 lässt in schematischer Explosionsdarstellung ein Gehäuse 1 nach der Erfindung erkennen. Dieses dient im bestimmungsgemäßen Verwendungsfall der Aufnahme von zwei Akkumulatormodulen, wobei je Akkumulatormodul 8 elektrisch miteinander verschaltete Lithium-Ionen-Akkumulatorzellen vorgesehen sind. Der besseren Übersicht wegen sind in den Figuren weder die Akkumulatormodule noch die Lithium-Ionen-Akkumulatorzellen im Einzelnen dargestellt.

Das erfindungsgemäße Gehäuse verfügt über einen Grundkörper 2, der U-förmig ausgebildet ist und einen Boden 3 sowie zwei daran angeordnete Seitenwände 4 und 5 aufweist. Der Grundkörper 2 ist bevorzugterweise aus einem Metallblech ausgebildet, das zur Schaffung der U-förmigen Ausgestaltung abgekantet ist.

Das Gehäuse 1 verfügt desweiteren über Frontabdeckungen, nämlich eine erste Frontabdeckung 10 und eine zweite Frontabdeckung 11. Den Frontabdeckungen 10 und 11 gegenüberliegend sind zwei rückwärtige Abdeckungen vorgesehen, nämlich eine erste rückwärtige Abdeckung 12 sowie eine zweite rückwärtige Abdeckung 13.

Im endmontierten Zustand sind die erste Frontabdeckung 10 und die erste rückwärtige Abdeckung 12 mit dem Grundkörper 2 verschraubt. Zu diesem Zweck weist der Grundkörper 2 Befestigungslaschen 8 sowie Befestigungslaschen 9 auf, wobei die Befestigungslaschen 8 der ersten Frontabdeckung 10 und die Befestigungslaschen 9 der ersten rückwärtigen Abdeckung 12 zugeordnet sind.

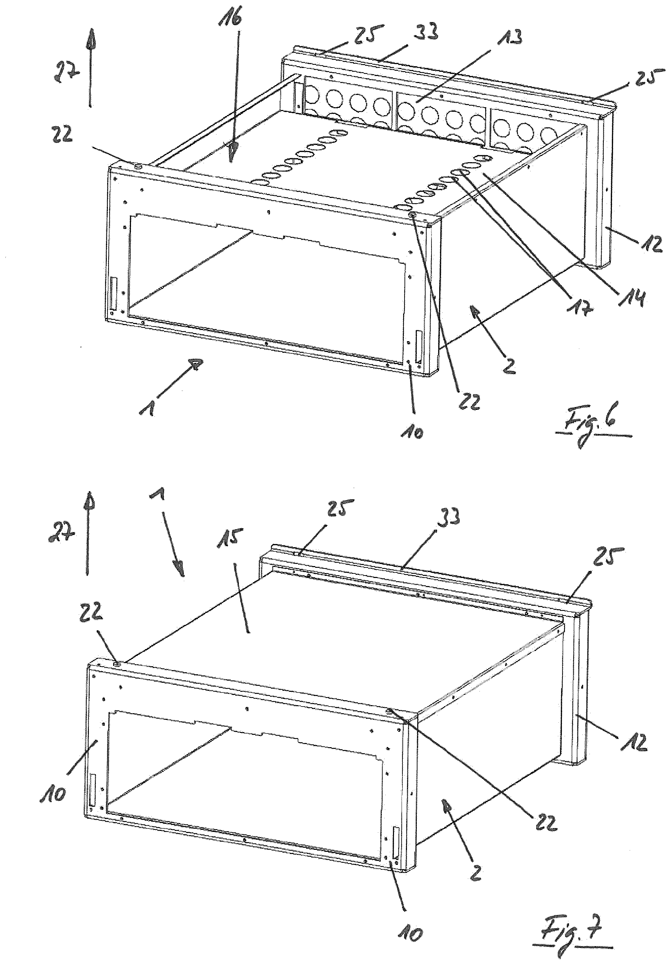

Das Gehäuse 1 verfügt desweiteren über ein erstes Deckelteil 14 und ein zweites Deckelteil 15. Im endmontierten Zustand sind die beiden Deckelteile 14 und 15 beabstandet zueinander angeordnet, so dass sich zwischen dem ersten Deckelteil 14 und dem zweiten Deckelteil 15 ein Spaltraum 16 ausbildet, wie dies insbesondere die Darstellung nach Figur 6 erkennen lässt.

Im endmontierten Zustand ist zwischen der ersten Frontabdeckung 10 und der zweiten Frontabdeckung 11 einerseits und der ersten rückwärtigen Abdeckung 12 und der zweiten rückwärtigen Abdeckung 13 andererseits jeweils ein Feuerschutzmaterial angeordnet, welches in den Figuren nicht im Einzelnen dargestellt ist. Bei diesem Feuerschutzmaterial handelt es sich bevorzugterweise um eine Matte, die aus einer feuer- und hitzebeständigen Faser gewebt, gewirkt oder sonstwie hergestellt ist.

In den Figuren nicht dargestellt ist desweiteren eine Umhüllung aus einem Feuerschutzmaterial vorgesehen, die im endmontierten Zustand am zweiten Deckelteil 15, an den beiden Seitenwänden 4 und 5 sowie an dem Boden 3 anliegt. Die aus einem Feuerschutzmaterial gebildete Umhüllung umgibt das Gehäuse mithin umfangsseitig, wobei gehäusefrontseitig und gehäuserückseitig jeweils Einlagen aus einem Feuerschutzmaterial vorgesehen sind, die zwischen der ersten Frontabdeckung 10 und der zweiten Frontabdeckung 11 beziehungsweise zwischen der ersten rückwärtigen Abdeckung 12 und der zweiten rückwärtigen Abdeckung 13 angeordnet sind. Im Ergebnis ergibt sich so eine Vollkapselung der vom Gehäuse im bestimmungsgemäßen Fall aufgenommenen Lithium-Ionen-Akkumulatorzellen.

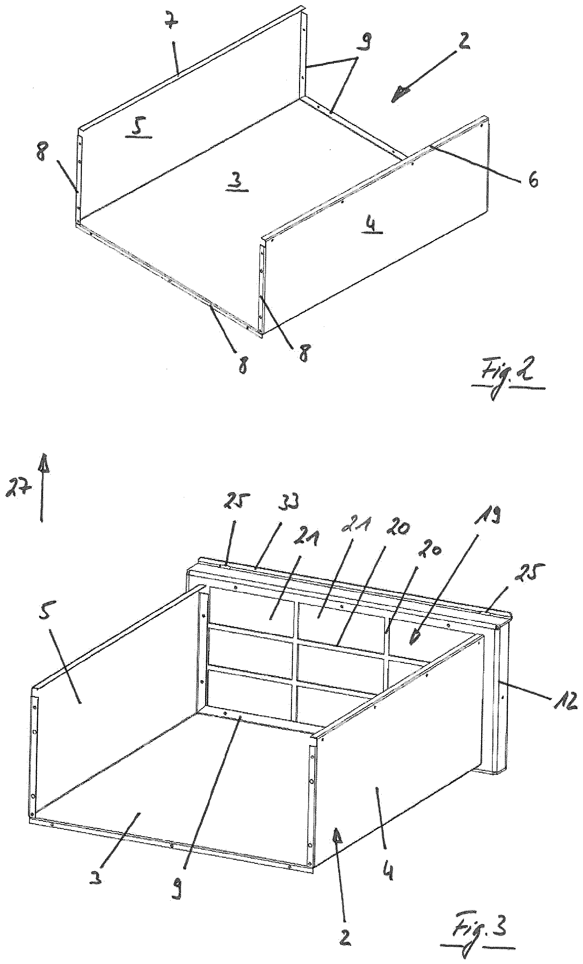

Die weiteren Figuren 2 bis 12 lassen an einer zweiten Ausführungsform des erfindungsgemäßen Gehäuses 1 die einzelnen Gehäusekomponenten in unterschiedlichen Montageschritten erkennen.

Figur 2 zeigt den Grundkörper 2 des erfindungsgemäßen Gehäuses 1. Wie sich aus dieser Darstellung ergibt, sind der Boden 3 und die Seitenwände 4 und 5 randseitig jeweils mit Befestigungslaschen 6, 7, 8 beziehungsweise 9 ausgerüstet. Diese Befestigungslaschen weisen nicht näher identifizierte Gewindebohrungen auf, in die im endmontierten Zustand Schrauben zur Anordnung der Frontabdeckungen 10 und/oder 11, der rückwärtigen Abdeckungen 12 und/oder 13 und/oder der Deckelteile 14 und/oder 15 eingreifen. Dabei sind die Befestigungslaschen 6 und 7 dem zweiten Deckelteil 15, die Befestigungslaschen 9 der ersten rückwärtigen Abdeckung 12 und die Befestigungslaschen 8 der ersten Frontabdeckung 10 zugeordnet. Anstelle von Verschraubungen zur Verbindung der einzelnen Baukomponenten können auch Nieten vorgesehen sein, was im Sinne einer vereinfachten herstellerseitigen Vormontage auch bevorzugt ist.

Figur 3 lässt den Grundkörper 2 mit montierter rückwärtiger Abdeckung 12 erkennen. Diese ist als Rahmenelement ausgebildet und stellt eine Durchtrittsöffnung 19 bereit. Diese Durchtrittsöffnung 19 ist mittels quer zueinander verlaufender Stege 20 in Einzelöffnungen 21 unterteilt. An diesen Stegen 20 stützt sich im endmontierten Zustand die zwischen den beiden rückwärtigen Abdeckungen 12 und 13 angeordnete Feuerschutzmatte ab.

Die erste rückwärtige Abdeckung 12 verfügt desweiteren über eine Abschlusskante 33, wobei im Übergangsbereich zur Abschlusskante 33 Schlitze 25 ausgebildet sind, die als Verbindungsmittelaufnahmen dienen.

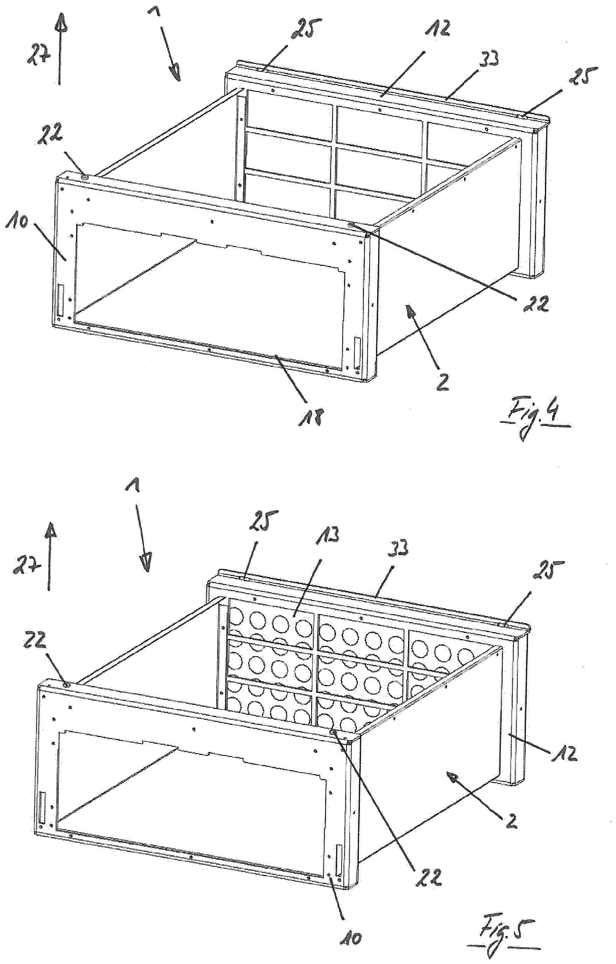

Figur 4 lässt den Grundkörper 2 mit montierter rückwärtiger Abdeckung 12 und montierter Frontabdeckung 10 erkennen.

Die Frontabdeckung 10 ist als Rahmenelemente ausgebildet und verfügt über eine Beschickungsöffnung 18, durch welche hindurch verwenderseitig Lithium-Ionen-Akkumulatorzellen beziehungsweise Akkumulatormodule in den vom Gehäuse 1 bereitgestellten Volumenraum eingebracht werden können. Die erste Frontabdeckung 10 stellt in Höhenrichtung 27 oberseitig zudem Bolzen 22 bereit, die als Verbindungsmittel dienen.

Figur 5 lässt in Ergänzung zu Figur 4 die im endmontierten Zustand an der ersten rückwärtigen Abdeckung 12 angeordnete zweite rückwärtige Abdeckung 13 erkennen. Diese ist bevorzugterweise mit der ersten rückwärtigen Abdeckung 12 verschraubt. Im gezeigten Ausführungsbeispiel ist die zweite rückwärtige Abdeckung 13 als Lochblech ausgebildet. Im verschraubten Zustand der beiden rückwärtigen Abdeckungen 12 und 13 ist das dazwischen angeordnete Feuerschutzmaterial zwischen den beiden Abdeckungen 12 und 13 lagesicher eingeklemmt. Ein ungewolltes Verrutschen des Feuerschutzmaterials ist so verhindert.

Figur 6 lässt in einer weiteren Ergänzung ein montiertes erstes Deckelteil 14 erkennen. Im endmontierten Zustand bildet sich zwischen dem ersten Deckelteil 14 und dem in Figur 6 nicht dargestellten zweiten Deckelteil 15 ein Spaltraum 16 aus. Dieser Spaltraum 16 steht über im Deckelteil 14 ausgebildete Ausnehmungen 17 in strömungstechnischer Verbindung mit dem vom Gehäuse 1 bereitgestellten Aufnahmeraum zur Aufnahme der Lithium-Ionen-Akkumulatorzellen. Im Brandfall entstehender Rauch kann so über die Ausnehmungen 17 in den Spaltraum 16 gelangen, wo eine Zwischenspeicherung erfolgt.

Im bestimmungsgemäßen Betriebsfall dient der Spaltraum 16 der Zuführung von Kühlluft, wobei der Spaltraum 16 über die Einzelöffnungen 21 und die von der zweiten rückwärtigen Abdeckung 13 bereitgestellten Löcher in strömungstechnischer Verbindung mit der das Gehäuse 1 umgebenden Außenatmosphäre steht. Dabei sorgt die zwischen den rückwärtigen Abdeckungen 12 und 13 angeordnete Feuerschutzmatte dafür, dass im Brandfall kein Rauch über die Öffnungen 21 und die in der zweiten Abdeckung 13 ausgebildeten Löcher nach außen dringen kann.

Figur 7 lässt in Ergänzung zu Figur 6 das endfertig montierte zweite Deckelteil 15 erkennen.

Wie sich aus der Darstellung nach Figur 7 ergibt, stehen die erste Frontabdeckung 10 sowie die erste rückwärtige Abdeckung 12 allumseitig über das zweite Deckelteil 15, die beiden Seitenwände 4 und 5 sowie den Boden 3 hinaus über. Es ist so ein Aufnahmeraum für die Umhüllung aus einem Feuerschutzmaterial geschaffen, die im endmontierten Zustand am zweiten Deckelteil 15, den beiden Seitenwänden 4 und 5 sowie dem Boden 3 anliegt.

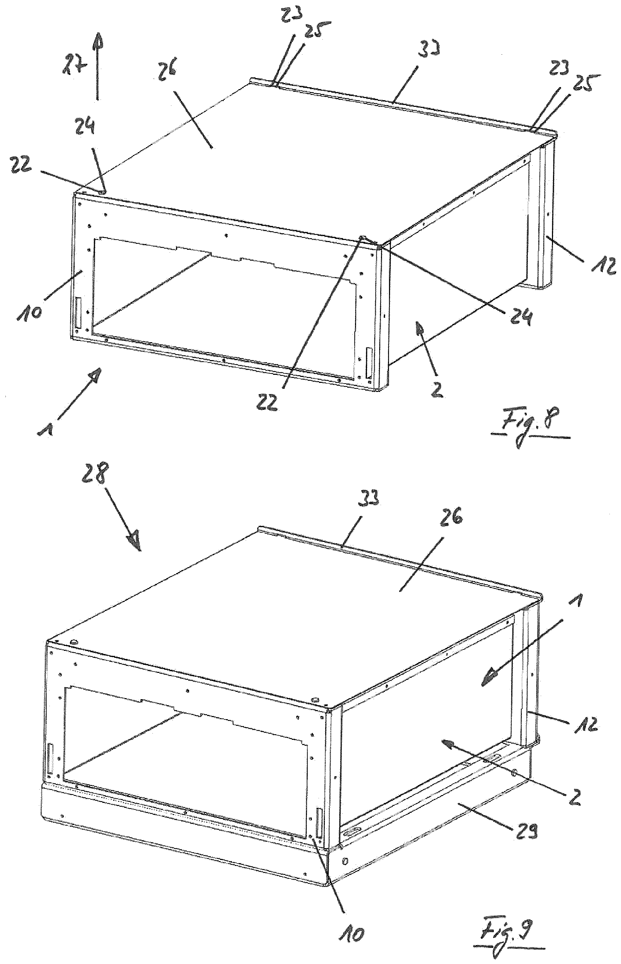

Mehrere der nach den Figuren 1 bis 7 vorbeschriebenen Gehäuse 1 können in Höhenrichtung 27 zu einer Gehäuseanordnung 28 übereinandergestapelt angeordnet werden. Das in einem solchen Stapelfall zu oberst angeordnete Gehäuse 1 ist mit einer Abschlussplatte 26 ausgerüstet, wie diese in Figur 8 zu erkennen ist. Wie sich aus dieser Darstellung ergibt, verfügt die Abschlussplatte 26 über Verbindungsmittelaufnahmen 24 in Form von Bohrungen, in die die Bolzen 22 des darunterliegenden Gehäuses 1 eingreifen. Im endmontierten Zustand greifen mithin die als Verbindungsmittel 22 dienenden Bolzen in die korrespondierend hierzu ausgebildeten Bohrungen 24. Dieses formschlüssige Ineinandergreifen erbringt eine lagesichere Fixierung der Abschlussplatte 26 in horizontaler Richtung.

Die Abschlussplatte 26 greift mit der Abschlusskante 33 zugeordneten Laschen 23 in die von der Abschlusskante 33 bereitgestellten Schlitze 25 ein. Dabei dienen die Laschen 23 als Verbindungsmittel und die Schlitze 25 als hierzu korrespondierend ausgebildete Verbindungsmittelaufnahmen. Diese formschlüssige Anordnung ermöglicht zumindest mit Bezug auf die Abschlusskante 33 eine Lagefixierung der Abschlussplatte 26 in horizontaler Richtung, im Übrigen in vertikaler Richtung. Da die Abschlussplatte 26 im Übrigen an der Abschlusskante 33 anliegt, ist in Kombination mit den frontseitigen Bolzen-Anordnungen eine zusätzliche Lagefixierung in horizontaler Richtung gegeben.

Figur 9 lässt eine erfindungsgemäße Gehäuseanordnung 28 erkennen, wobei hier der denkbar einfachste Fall dargestellt ist. Demgemäß verfügt die Gehäuseanordnung 28 nur über ein Gehäuse 1, das oberseitig die Abschlussplatte 26 trägt und welches unterseitig von einem Rahmenelement 29 abgestützt ist.

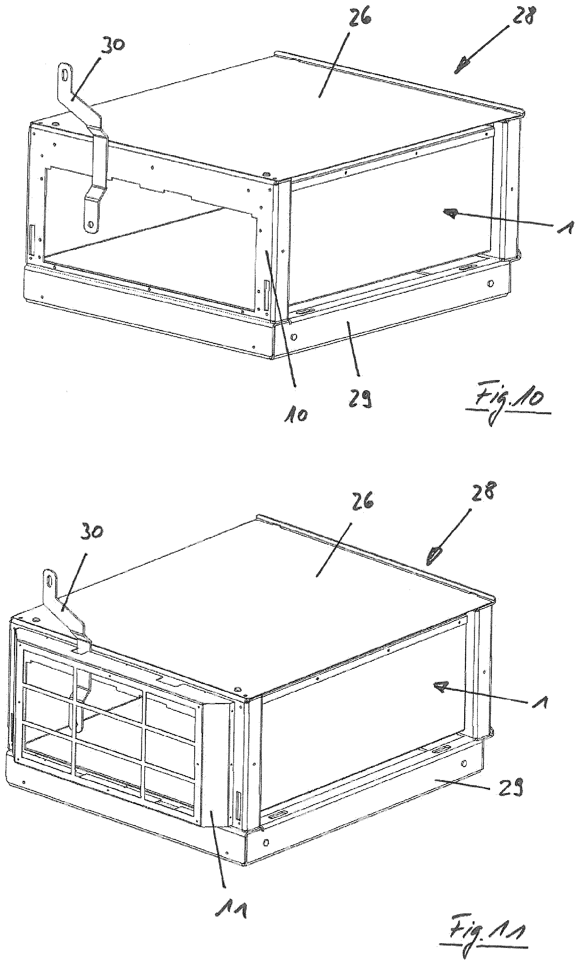

Zur elektrischen Verbindung der von mehreren Gehäusen 1 aufgenommenen Lithium-Ionen-Akkumulatorzellen ist je Gehäuse 1 eine Polbrücke 30, auch Verbinder genannt, vorgesehen, wie dies in Figur 10 dargestellt ist.

Im endmontierten Zustand ist je Gehäuse 1 die schon vorstehend beschriebene zweite Frontabdeckung 11 vorgesehen, wie dies Figur 11 erkennen lässt. Dabei stellt die zweite Frontabdeckung 11 entsprechende Schlitze zur Hindurchführung der Polbrücke 30 zur Verfügung, wie sich dies ebenfalls aus einer Anschau nach Figur 11 ergibt.

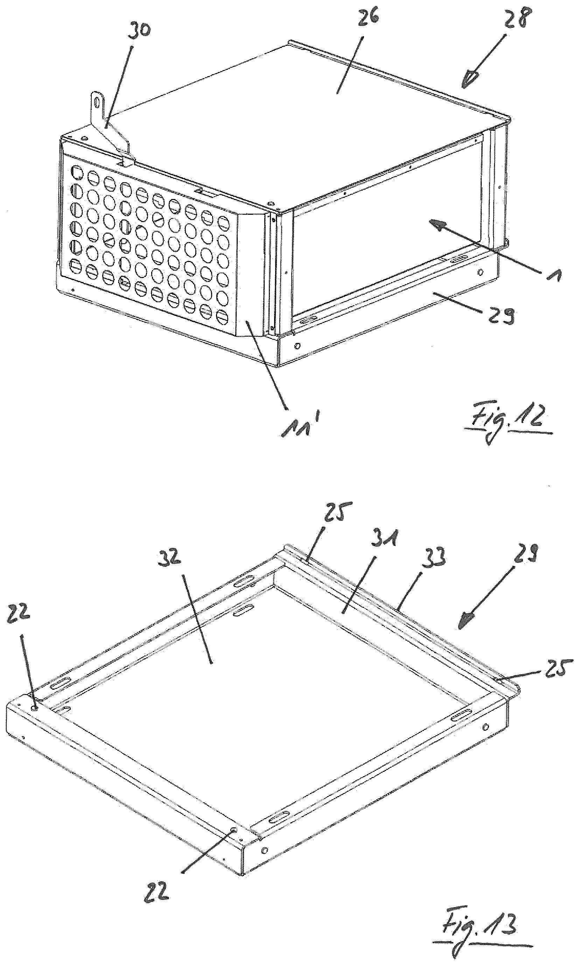

Die Ausgestaltung nach den Figuren 2 bis 12 lässt eine Ausführungsform erkennen, dergemäß die zweite Frontabdeckung 11 zweiteilig ausgebildet ist und über einen ersten Teil 11 und einen zweiten Teil 11' verfügt. Dabei lässt Fig. 11 den ersten Teil der Frontabdeckung 11 erkennen. Im endmontierten Zustand deckt der erste Teil 11 der zweiten Frontabdeckung die von der ersten Frontabdeckung 10 bereitgestellte Beschickungsöffnung 18 ab, wie sich dies aus Fig. 11 ergibt. Im endmontierten Zustand deckt gemäß Fig. 12 ein zweiter Teil 11' der zweiten Frontabdeckung den ersten Teil 11 der zweiten Frontabdeckung ab. Dabei ist der zweite Teil 11' der zweiten Frontabdeckung nach Art eines Lochblechs ausgebildet und verfügt über kreisförmige Ausnehmungen.

Im endmontierten Zustand ist das frontseitig vorgesehene Feuerschutzmaterial zwischen den beiden Teilen 11 und 11' der zweiten Frontabdeckung angeordnet. Aus diesem Grunde verfügt auch der erste Teil 11 der zweiten Frontabdeckung über Stege, die im endmontierten Zustand das zwischen den beiden zweiten Frontabdeckungen angeordnete Feuerschutzmaterial rückwärtig abstützen, so dass ein ungewolltes Eindringen des Feuerschutzmaterials in den vom Gehäuse bereitgestellten Volumenraum unterbunden ist.

Figur 13 lässt in einer schematisch perspektivischen Ansicht das schon vorstehend beschriebene Rahmenelement 29 in einer Detaildarstellung erkennen. Wie sich aus dieser Darstellung ergibt, stellt das Rahmenelement 29 einen Rahmen 31 und einen daran angeordneten Boden 32 bereit. Dabei sind am Rahmen 31 zwei Verbindungsmittel 22 in Form von Bolzen sowie zwei Verbindungsmittelaufnahmen 25 in Form von Schlitzen vorgesehen. Im endmontierten Zustand, wie dieser beispielsweise in Figur 12 gezeigt ist, greift das in Höhenrichtung 27 oberhalb des Rahmenelements 29 vorgesehene Gehäuse 1 mit seinen zugehörigen Verbindungsmitteln 23 beziehungsweise seinen Verbindungsmittelaufnahmen 24 in die Bolzen 22 beziehungsweise die Schlitze 25 des Rahmenelements 29 ein.

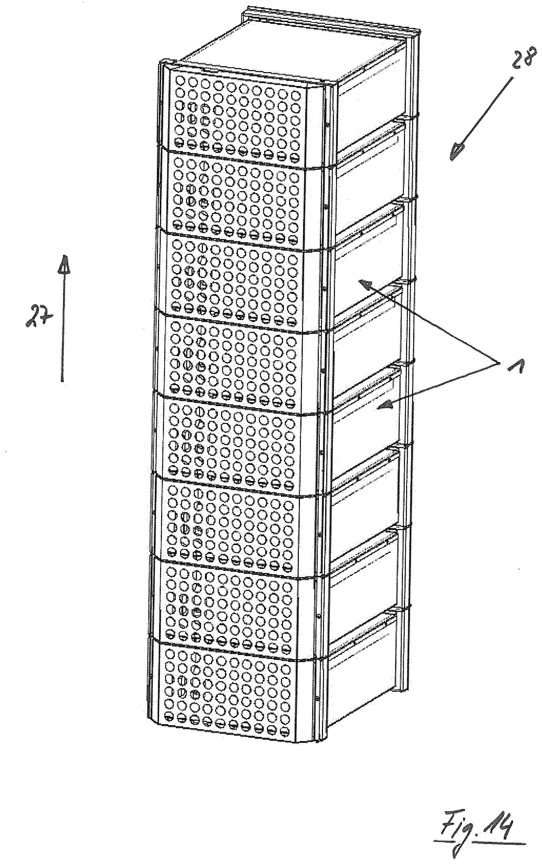

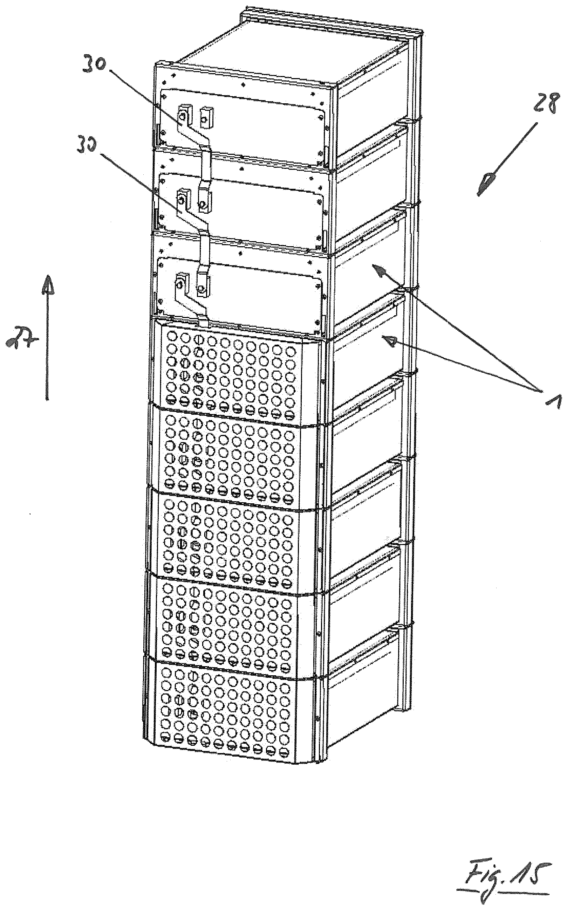

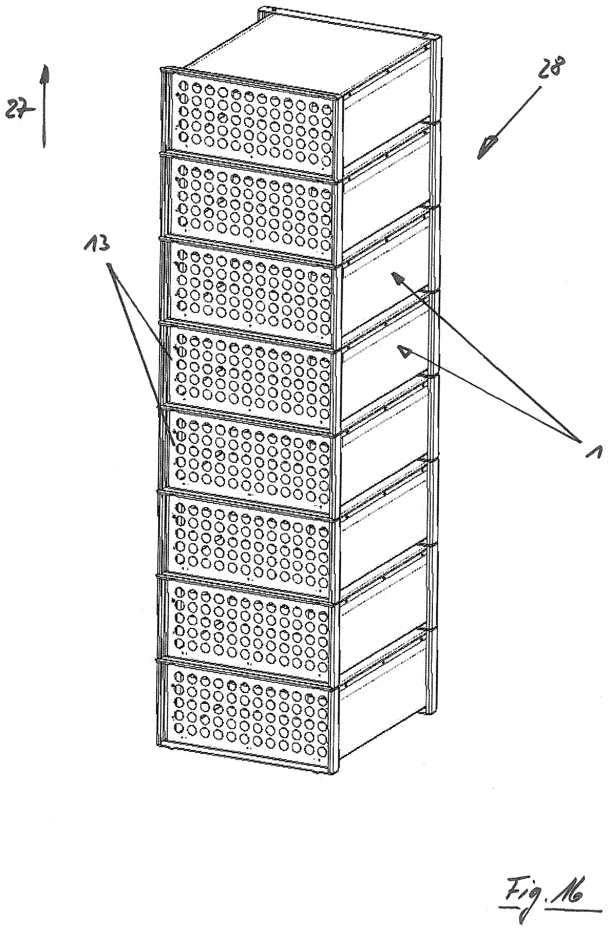

Die Figuren 14 bis 16 lassen in unterschiedlichen Perspektivansichten eine erfindungsgemäße Gehäuseanordnung 28 erkennen, wobei die Gehäuseanordnung 28 über eine Vielzahl von in Höhenrichtung 27 übereinander angeordneten Gehäuse 1 der vorbeschriebenen Art verfügt. Der besseren Übersicht wegen sind in den Figuren 14 bis 16 die obere Abschlussplatte 26 sowie das untere Rahmenelement 29 nicht dargestellt.

Jedes der Gehäuse 1 einer Gehäuseanordnung 28 stellt eine vom jeweiligen Gehäuse 1 bereitgestellte Ummantelung aus einem Feuerschutzmaterial bereit, die die vom jeweiligen Gehäuse 1 aufgenommenen Lithium-Ionen-Akkumulatorzellen umgibt. Im Brandfall ist eine Zerstörung der Lithium-Ionen-Akkumulatorzellen auf diejenigen eines Gehäuses 1 beschränkt. Ein kaskadierender Brandübergriff auf die Lithium-Ionen-Akkumulatorzellen eines benachbarten Gehäuses 1 ist aufgrund der erfindungsgemäß vorgesehenen Konstruktion sicher verhindert.

### Bezugszeichen

- 1: Gehäuse
- 2: Grundkörper
- 3: Bolzen
- 4: Seitenwand
- 5: Seitenwand
- 6: Befestigungslasche
- 7: Befestigungslasche
- 8: Befestigungslasche
- 9: Befestigungslasche
- 10: erste Frontabdeckung
- 11: zweite Frontabdeckung (erster Teil)
- 11': zweite Frontabdeckung (zweiter Teil)
- 12: erste rückwärtige Abdeckung
- 13: zweite rückwärtige Abdeckung
- 14: erstes Deckelteil
- 15: zweites Deckelteil
- 16: Spaltraum
- 17: Ausnehmung
- 18: Beschickungsöffnung
- 19: Durchlassöffnung
- 20: Steg
- 21: Einzelöffnung
- 22: Verbindungsmittel (Bolzen)
- 23: Verbindungsmittel (Lasche)
- 24: Verbindungsmittelaufnahme (Bohrung)
- 25: Verbindungsmittelaufnahme (Schlitz)
- 26: Abschlussplatte
- 27: Gehäusehöhenrichtung
- 28: Gehäuseanordnung
- 29: Rahmenelement
- 30: Polbrücke
- 31: Rahmen
- 32: Boden
- 33: Abschlusskante

## Patentansprüche

1. Gehäuse zur Aufnahme einer Lithium-Ionen-Akkumulatorzelle, mit einem einen Boden (3) und zwei Seitenwände (4, 5) aufweisenden, U-förmig ausgebildeten Grundkörper (2), mit einer ersten und einer zweiten Frontabdeckung (10, 11) und einer ersten und einer zweiten rückwärtigen Abdeckung (12, 13), wobei zwischen erster und zweiter Frontabdeckung (10, 11) und zwischen erster und zweiter rückwärtiger Abdeckung (12, 13) jeweils ein Feuerschutzmaterial angeordnet ist, und mit einem ersten und einem zweiten Deckelteil (14, 15), die unter Ausbildung eines Spaltraums (16) beabstandet zueinander angeordnet sind, und mit einer an dem zweiten Deckelteil (15), an dem Boden (3) und an den Seitenwänden (4, 5) anliegenden Umhüllung aus einem feuerdurchschlagsfestem Feuerschutzmaterial, sowie mit in Gehäusehöhenrichtung (27) gehäuseunterseitig und/oder gehäuseoberseitig vorgesehenen Verbindungsmitteln (22, 23) und gehäuseunterseitig und/oder gehäuseoberseitig vorgesehenen Verbindungsmittelaufnahmen (24, 25), wobei die Verbindungsmittel (22, 23) und die Verbindungsmittelaufnahmen (24, 25) korrespondierend zueinander ausgebildet sind.

2. Gehäuse nach Anspruch 1, **dadurch gekennzeichnet, dass** das erste Deckelteil (14) Ausnehmungen (17) aufweist.

3. Gehäuse nach Anspruch 1 oder 2, **dadurch gekennzeichnet, dass** die erste Frontabdeckung (10) eine Beschickungsöffnung (18) bereitstellt.

4. Gehäuse nach einem der vorhergehenden Ansprüche, **dadurch gekennzeichnet, dass** die erste rückwärtige Abdeckung (12) eine Durchlassöffnung (19) bereitstellt.

5. Gehäuse nach Anspruch 4, **dadurch gekennzeichnet, dass** die Durchlassöffnung (19) mittels quer zueinander verlaufender Stege (20) in Einzelöffnungen (21) unterteilt ist.

6. Gehäuse nach einem der vorhergehenden Ansprüche, **dadurch gekennzeichnet, dass** die zweite rückwärtige Abdeckung (13) ein Lochblech ist.

7. Gehäuse nach einem der vorhergehenden Ansprüche, **dadurch gekennzeichnet, dass** die erste Frontabdeckung (10) und die erste rückwärtige Abdeckung (12) jeweils als Rahmenelement ausgebildet und mit dem Grundkörper (2) verschraubt sind.

8. Gehäuse nach einem der vorhergehenden Ansprüche, **dadurch gekennzeichnet, dass** die erste Frontabdeckung (10) und die erste rückwärtige Abdeckung (12) den Grundkörper (3) allseitig überragen.

9. Gehäuse nach einem der vorhergehenden Ansprüche, **dadurch gekennzeichnet, dass** das erste Deckelteil (14) in Gehäusehöhenrichtung (27) unterhalb der oberen Abschlusskante von erster Frontabdeckung (10) und erster rückwärtigen Abdeckung (12) angeordnet ist.

10. Gehäuse nach einem der vorhergehenden Ansprüche, **dadurch gekennzeichnet, dass** die Verbindungsmittel (22, 23) Vorsprünge, insbesondere Bolzen, Laschen, Absätze und/oder dergleichen sind.

11. Gehäuse nach einem der vorhergehenden Ansprüche, **dadurch gekennzeichnet, dass** die Verbindungsmittelaufnahmen (24, 25) Ausnehmungen zur formschlüssigen Aufnahme von Verbindungsmitteln (22, 23), insbesondere Bohrungen, Nute, Schlitze und/oder dergleichen sind.

12. Gehäuseanordnung mit einer Mehrzahl von in Höhenrichtung (27) übereinander angeordneten Gehäusen (1) nach einem der vorhergehenden Ansprüche 1 bis 11, wobei die Verbindungsmittel (22, 23) eines Gehäuses (1) in die Verbindungsmittelaufnahmen (24, 25) des in Höhenrichtung (27) darüber und/oder darunter angeordneten Gehäuses (1) eingreifen.

13. Gehäuseanordnung nach Anspruch 12, **gekennzeichnet durch** ein Rahmenelement (29), das unterhalb des in Höhenrichtung (27) zu unterst angeordneten Gehäuses (1) angeordnet ist.

14. Gehäuseanordnung nach Anspruch 13, **dadurch gekennzeichnet, dass** das Rahmenelement (29) Verbindungsmittel (22, 23) und/oder Verbindungsmittelaufnahmen (24, 25) aufweist.

15. Gehäuseanordnung nach einem der vorhergehenden Ansprüche 12 bis 14, **gekennzeichnet durch** eine Mehrzahl von nebeneinander angeordneten Gehäusestapeln, die jeweils eine Mehrzahl von in Höhenrichtung (27) übereinander angeordnete Gehäuse nach einem der vorhergehenden Ansprüche 1 bis 11 aufweisen, wobei benachbarte Gehäusestapel miteinander verbunden, insbesondere miteinander verschraubt sind.

## Claims

1. Housing for accommodating a lithium-ion accumulator cell, having a base body (2) which has a bottom (3) and two side walls (4, 5) and is of U-shaped design, having a first and a second front cover (10, 11) and a first and a second rear cover (12, 13), a fire-protection material being arranged in each case between the first and second front cover (10, 11) and between the first and second rear cover (12, 13), and having a first and a second cover part (14, 15) which are arranged at a distance from one another, forming a gap (16), and with an envelope of a fire-penetration-resistant fire protection material applied against the second cover part (15), against the base (3) and against the side walls (4, 5), and having connecting means (22, 23) provided on the bottom side of the housing and/or on the top side of the housing and connecting means receptacles (24, 25) provided on the bottom side of the housing and/or on the top side of the housing, the connecting means (22, 23) and the connecting means receptacles (24, 25) being designed to correspond to one another.

2. Housing according to claim 1, **characterized in that** the first cover part (14) has recesses (17).

3. Housing according to claim 1 or 2, **characterized in that** the first front cover (10) provides a loading opening (18).

4. Housing according to any of the preceding claims, **characterized in that** the first rear cover (12) provides a passage opening (19).

5. Housing according to claim 4, **characterized in that** the passage opening (19) is divided into individual openings (21) by means of webs (20) extending transversely to one another.

6. Housing according to any of the preceding claims, **characterized in that** the second rear cover (13) is a perforated sheet.

7. Housing according to any of the preceding claims, **characterized in that** the first front cover (10) and the first rear cover (12) are each formed as a frame element and are screwed to the base body (2).

8. Housing according to any of the preceding claims, **characterized in that** the first front cover (10) and the first rear cover (12) project beyond the base body (3) on all sides.

9. Housing according to any of the preceding claims, **characterized in that** the first cover part (14) is arranged in the housing height direction (27) below the upper terminating edge of the first front cover (10) and first rear cover (12).

10. Housing according to any of the preceding claims, **characterized in that** the connecting means (22, 23) are projections, in particular bolts, tabs, shoulders and/or the like.

11. Housing according to any of the preceding claims, **characterized in that** the connecting means receptacles (24, 25) are recesses for positive reception of connecting means (22, 23), in particular bores, grooves, slots and the like.

12. Housing arrangement with a plurality of housings (1) arranged one above the other in the height direction (27) according to one of the preceding claims 1 to 11, wherein the connecting means (22, 23) of a housing (1) engage in the connecting means receptacles (24, 25) of the housing (1) arranged above and/or below it in the height direction (27).

13. Housing arrangement according to claim 12, **characterized by** a frame element (29) which is arranged below the housing (1) arranged lowermost in the height direction (27).

14. Housing arrangement according to claim 13, **characterized in that** the frame element (29) has connecting means (22, 23) and/or connecting means receptacles (24, 25).

15. Housing arrangement according to any one of the preceding claims 12 to 14, **characterized by** a plurality of housing stacks arranged side by side, which each have a plurality of housings arranged one above the other in the height direction (27) according to any one of the preceding claims 1 to 11, adjacent housing stacks being connected to one another, in particular being screwed to one another.

## Revendications

1. Boîtier destiné à recevoir une cellule d'accumulateur au lithium-ion, avec un corps de base (2) en forme de U présentant un fond (3) et deux parois latérales (4, 5), avec un premier et un deuxième couvercle frontal (10, 11) et un premier et un deuxième couvercle arrière (12, 13), un matériau de protection contre le feu étant respectivement disposé entre le premier et le deuxième couvercle frontal (10, 11) et entre le premier et le deuxième couvercle arrière (12, 13), et avec une première et une deuxième partie de couvercle (14, 15), qui sont disposées à distance l'une de l'autre en formant un espace (16), et avec une enveloppe en matériau ignifuge résistant à la pénétration du feu, s'appliquant contre la deuxième partie de recouvrement (15), contre le fond (3) et contre les parois latérales (4, 5), ainsi qu'avec des moyens de liaison (22, 23) et des logements de moyens de liaison (24, 25) prévus du côté inférieur et/ou du côté supérieur du boîtier, les moyens de liaison (22, 23) et les logements de moyens de liaison (24, 25) étant réalisés de manière à se correspondre.

2. Boîtier selon la revendication 1, **caractérisé en ce que** la première partie de couvercle (14) présente des évidements (17).

3. Boîtier selon la revendication 1 ou 2, **caractérisé en ce que** le premier couvercle avant (10) fournit une ouverture de chargement (18).

4. Boîtier selon l'une quelconque des revendications précédentes, **caractérisé en ce que** le premier couvercle arrière (12) fournit une ouverture de passage (19).

5. Boîtier selon la revendication 4, **caractérisé en ce que** l'ouverture de passage (19) est divisée en ouvertures individuelles (21) au moyen de nervures (20) s'étendant transversalement les unes par rapport aux autres.

6. Boîtier selon l'une quelconque des revendications précédentes, **caractérisé en ce que** le deuxième couvercle arrière (13) est une tôle perforée.

7. Boîtier selon l'une quelconque des revendications précédentes, **caractérisé en ce que** le premier couvercle avant (10) et le premier couvercle arrière (12) sont chacun conçus comme un élément de cadre et sont vissés au corps de base (2).

8. Boîtier selon l'une quelconque des revendications précédentes, **caractérisé en ce que** le premier couvercle avant (10) et le premier couvercle arrière (12) dépassent de tous les côtés du corps de base (3).

9. Boîtier selon l'une quelconque des revendications précédentes, **caractérisé en ce que** la première partie de couvercle (14) est disposée, dans le sens de la hauteur du boîtier (27), en dessous du bord de fermeture supérieur du premier couvercle avant (10) et du premier couvercle arrière (12).

10. Boîtier selon l'une quelconque des revendications précédentes, **caractérisé en ce que** les moyens de liaison (22, 23) sont des saillies, notamment des boulons, des pattes, des épaulements et/ou analogues.

11. Boîtier selon l'une quelconque des revendications précédentes, **caractérisé en ce que** les logements de moyens de liaison (24, 25) sont des évidements destinés à recevoir par complémentarité de forme des moyens de liaison (22, 23), notamment des perçages, des rainures, des fentes et similaires.

12. Ensemble de boîtiers comprenant une pluralité de boîtiers (1) disposés les uns au-dessus des autres dans la direction de la hauteur (27) selon l'une des revendications précédentes 1 à 11, les moyens de liaison (22, 23) d'un boîtier (1) s'engageant dans les logements de moyens de liaison (24, 25) du boîtier (1) disposé au-dessus et/ou au-dessous dans la direction de la hauteur (27).

13. Ensemble de boîtiers selon la revendication 12, **caractérisé par** un élément de cadre (29) qui est disposé en dessous du boîtier (1) disposé tout en bas dans la direction de la hauteur (27).

14. Ensemble de boîtiers selon la revendication 13, **caractérisé en ce que** l'élément de cadre (29) présente des moyens de liaison (22, 23) et/ou des logements de moyens de liaison (24, 25).

15. Ensemble de boîtiers selon l'une des revendications précédentes 12 à 14, **caractérisé par** une pluralité de piles de boîtiers disposées les unes à côté des autres, qui présentent chacune une pluralité de boîtiers disposés les uns au-dessus des autres dans le sens de la hauteur (27) selon l'une des revendications précédentes 1 à 11, des piles de boîtiers voisines étant reliées entre elles, en particulier vissées entre elles.
